# EUROPEAN PATENT SPECIFICATION

(11) **EP 3 365 173 B1**
(45) Date of publication and mention of the grant of the patent: **05.08.2020**
(21) Application number: 16794443.8
(22) Date of filing: 21.10.2016
(51) Int. Cl.: B32B 15/08, B32B 15/085, B32B 15/20, B32B 27/08, B32B 27/32, B32B 3/26, B65D 77/20, B32B 7/12, B32B 27/30, B32B 7/05

(54) **SEALING FOIL WITH PULL TAB**
SIEGELFOLIE MIT ABREISSLASCHE
PELLICULE DE SCELLAGE À LANGUETTE À TIRER

(30) Priority: 22.10.2015 WO PCT/NL2015/050733
(43) Date of publication of application: 29.08.2018
(73) Proprietor: N.V. Nutricia, 2712 HM Zoetermeer (NL)
(72) Inventor: ARTS, Jos, 3584 CT Utrecht (NL); BUNCE, Martin Christopher, Marlborough Wiltshire SN8 4AW (GB)
(74) Representative: Nederlandsch Octrooibureau
(86) International application number: PCT/NL2016/050721
(87) International publication number: WO 2017/069623

(56) References cited:
- WO-A1-2014/129887
- US-A1- 2004 071 934
- US-A1- 2009 178 945

## Description

### BACKGROUND OF THE INVENTION

### 1. Field of the Invention

The present invention relates to sealing foils for use in packaging and in particular to single web sealing foils having a weakened tear line along which the foil may be torn to open the package. The invention also relates to a package and a method of forming such a sealing foil.

### 2. Description of the Related Art

Packages are available in many forms and sizes according to the product to be contained. In the food packaging industries, tub-like containers are frequently used for receiving a product that is dispensed from the tub during a period of use. The presence of a sealing foil can be of great importance in maintaining a product in sterile or fresh condition prior to first use. One form of foil that has been disclosed for such packaging is shown in WO2014062119. The foil comprises two layers or webs, welded together during a production stage, wherein the first layer is an aluminium laminate that can be heat sealed or otherwise welded to the sides of a container. A laminated lidstock is shown in US 2009/178945 comprising a multilayer substrate film with an EVOH barrier layer and a die cut extending through the substrate film made by laser cutting. Another example of a sealing foil is disclosed in WO 2014/129887.

In order to open such seals, they may be provided with a tear line extending along a tearing path around the lid. The tear line may cut the first layer but may not penetrate a hermetic second layer located beneath the first layer and welded thereto. For this reason, the first layer is cut e.g. in a punching process prior to assembly with the second layer. A pull tab may be provided for a user to grasp and commence tearing the second layer along the tearing path to the point that a panel may be removed, giving access to the contents. In order that sealing prior to opening is not compromised, the tear line should be confined within the region covered by the hermetic second layer. In double-web systems, these layers are not always co-extensive, with the first layer extending outwards of the second layer for bonding with the sides of the container. As they are assembled together after cutting of the tear line, careful positioning is required to ensure that the second layer completely covers the tear line. Individual, pre-formed foils are then delivered to a packaging machine where they must be accurately bonded to the filled container to ensure that the panel is aligned with the intended access opening. The steps required to produce, assemble and install double web seals on tub-like packages are relatively complex.

Single-web foils are also known, comprising multiple layers that are laminated together during a production process. Packages using such foils may be provided with tear lines formed using laser techniques to partially cut through the foil. Pull tabs may also be provided to identify the place at which a user should commence opening and encourage correct use. Users of all sorts of packages will be aware of the frustration associated with pull tabs that break or fail to open and with foils that rip or delaminate in a direction other than that intended by the manufacturer. Delamination is a particular problem, since the adhesives generally used for laminating such foils may be limited in their strength. The minimum force required to cause opening of the package may then approach or exceed the peel force at which the foil delaminates. When an oxygen barrier layer is included in the laminate additional difficulties arise, since cutting of the tear line should not compromise the barrier layer. It would be desirable to provide an alternative foil that improves on the existing designs.

### BRIEF SUMMARY OF THE INVENTION

According to the invention there is provided a tearable foil according to the features of claim 1.

A number of useful effects may be achieved by the particular configuration of the pull tab. Firstly, the very requirement of providing a plurality of wings, reduces the force applied to each individual wing. In one embodiment, the pull tab comprises a pair of wings on either side of a spine and the user grips the pair of wings together. Reference in the description below will be to such a pair of wings in a butterfly configuration. It is however understood that a greater number of wings could be provided, either aligned along a spine or otherwise surrounding a central region. Secondly, the action of gripping a pair or plurality of wings may at least partially dictate a direction of an applied force, encouraging a user to pull upwards at right angles to the foil or at least in the lengthwise direction of the spine. A user grasping a single tab may be inclined to pull the tab sideways with a component in the plain of the foil, risking delamination of the tab or ripping of the foil. It is also noted that, although reference is given to folding the lateral wings together at right angles to a plane of the foil, this is merely intended to mean that the wings are folded upwards by at least 90 degrees. The actual folding will depend on the width of the spine or central region and the manner in which the wings are gripped. It will generally mean that the wings are folded through an angle greater than 90 degrees.

In an embodiment, the foil may comprise a support layer below the barrier layer. The barrier layer is thus sandwiched between the cover layer and the support layer. The support layer preferably comprises polypropylene (PP). The use of PP is of particular utility in that it may be heat-sealed or otherwise welded to PP packaging as will be further described below. The support layer may itself be a laminate of a number of layers and may typically be present in a thickness of from 10 to 100 microns, preferably from 20 to 60 microns and in one embodiment around 40 microns.

In order to further facilitate opening of the foil, the support layer may comprise a cut in or adjacent to the central region to facilitate tearing of the foil at this point. Even though the cover layer may be provided with a tear line, as many users of packages will be aware, this may not itself ensure that tearing takes place as intended. By weakening of the support layer at the location of the central region, tearing can be caused to initiate at this point. Although reference is made to a cut, this is not intended to be limiting and the skilled person will understand that one or more cuts may be present and that these may be any form of initiator or point of weakness, partially or entirely passing through the support layer. The same applies to the tear line, which may be understood to include multiple tear lines and also comprise scoring, weakening, perforation or any other arrangement which achieves the required effect.

Additionally, there may be provided a region of partial lamination surrounding the central region, where the lateral wings are weakly adhered to the remainder of the foil. This region of partial lamination may also be referred to as a region of partial adhesion in that the cover layer is adhered to the layer below it with a lower adhesion than the central region. The adhesion may be constant throughout the region of partial lamination or there may be a gradient from the wings to the central region. A consequence of the partial lamination is that when a user raises the lateral wings and grips them to exert a force on the central region, this force may gradually increase as the partial lamination delaminates. It will thus be understood that the adhesion in this region should be sufficiently low that delamination takes place before there is any chance of ripping of the lateral wings. It is also not excluded that the delaminated region beneath the wings has a minimal degree of adhesion and the term delaminated is intended to denote that the wings can be peeled back by a user.

In one embodiment, the cut traverses the region of partial lamination and extends under the central region. In this manner, as a force is applied to the lateral wings a maximum force may be achieved at the point at which they have delaminated up to the margin of the central region where full lamination is present. By ensuring that the cuts intersect with this margin, the line of maximum force will intersect with the line of weakness. Although the actual operation will depend on many factors, this point or these points will hopefully define the location at which tearing of the foil commences. Tearing may then continue along the cuts, leading into the tear strip. It goes without saying that the lamination or full adhesion in the central region should be sufficient to provide the force required to cause tearing of the foil. It will also be understood that the material of the cover layer should be of sufficient strength to prevent ripping of the lateral wings before tearing of the foil takes place. The skilled person will be aware of the material consideration necessary to achieve these relative strengths. In certain embodiments, the adhesive used may be a urethane based adhesive, preferably solvent free and with a peel strength in the fully laminated area of above 2 N/15mm ASTM F904. In the region of partial lamination, the adhesion may be between 50 % and 80 % of that in the region of full lamination, preferably around 70%.

The oxygen barrier layer may be provided by any suitable material that achieves the required oxygen barrier properties. The concept of an oxygen barrier is well understood by persons skilled in the art of packaging technology as being a layer that limits diffusion of oxygen compared to conventional packaging materials such as carton or polyolefins. Ethylene vinyl alcohol (EVOH) and aluminium are commonly used oxygen barrier layers that may be considered suitable.

In one embodiment, the tear line is cut through the cover layer by use of a laser. In this case, the use of a oxygen barrier layer of aluminium may serve to prevent deeper penetration of the laser into the remainder of the foil. A layer of aluminium having a thickness of between 4 microns and 15 microns may be sufficient although other thicknesses may be considered. In one embodiment a 9 micron layer of aluminium is provided. The cut or cuts in the support layer may then also be carried out by a laser.

In a further embodiment, the support layer may comprise a further barrier layer. The further barrier layer may be useful in ensuring that the foil is highly impermeable to oxygen even if slight imperfections are present in the oxygen barrier layer, e.g. due to cracking or pinpricks at the location of the tear line. The further barrier layer may comprise EVOH. In one embodiment, the support layer is a PP/EVOH/PP laminate.

The cover layer may comprise any suitable polymer material that can achieve the required strength for the lateral wings. In one embodiment, it is desirable that the cover layer is of a similar material to the support layer for recycling purposes. In another embodiment, the cover layer may be of a material that is susceptible to being welded or otherwise adhered to a further portion of a package. Oriented PP (OPP) has been found particularly suitable, especially when used in combination with a PP support layer. The OPP can withstand higher temperatures than the PP layer and allows use of ultrasonic welding techniques to weld the upper surface of the cover layer to a packaging rim. The cover layer may itself be laminated from a number of sub-layers, including multiple, separately extruded OPP layers.

The dimensions and shape of the lateral wings will depend at least partially on the particular packaging requirements. In general, the wings should be of a size sufficient to grip between the fingers of a user. In one embodiment, each wing may have an area of at least 1 cm², more preferably at least 2cm². The wings may each be less than 10 cm². They may also have any shape including rectangular, semi-circular, triangular or lobe shaped. In particular, they may be shaped to encourage a user to apply an initial force at one end rather than at another end of the pull tab.

The removable panel through the foil is encircled by a border. Pulling on the pull tab causes the tear strip to tear the foil along the tear line from the pull tab to a tail such that the panel may be removed. The tear strip may remain attached to the panel. In this context, encircle is intended to denote that the border completely encircles an opening allowing access through the foil. The border may remain attached to the package. In one embodiment, the direction that the tear is intended to follow in rupturing of the foil is indicated by a plurality of guiding arrows. An advantage thereof is that the consumer is further aided in opening of the foil in accordance with its intended use with the presence of guiding arrows assists the consumer in applying force in the correct direction, thus further minimising irregularities in the opening.

The invention also relates to a package comprising a tub having a base and a sidewall defining a product containing space, the sidewall terminating in a peripheral flange defining an access opening to the space and a foil as described above or hereinafter, sealed at its border to the flange.

The package may further comprise a rim, the rim being connected to the flange with the foil sandwiched therebetween. An advantage of the package thus described is that the removable panel may be separated from the foil leaving the border between the flange and the rim otherwise undisturbed. Once the foil is opened, the joint between flange and rim may be part of the closure mechanism of the package and any disturbance of the foil at this point could compromise the effectiveness of this closure.

In a still further embodiment, the package may comprise a lid connected to the rim. The lid may be pivotable between an open position and a closed position in which it closes the access opening. The lid may be hinged directly to the rim or may be hinged to an intermediate member that connects to the rim

In one embodiment, the tub and the rim comprise PP. In particular, for a PP foil, this ensures that all elements may be recycled together. Additionally, PP is suitable for thermoforming. In the case of a thermoformed package, the flange may be an outwardly extending flange. The foil as described is particularly suitable for use in connection to an outwardly connecting flange, due to the fact that the removable panel may be removed, leaving the border attached to the flange.

The package is particularly suited for the storage of oxygen sensitive products such as infant formula and in an embodiment the package may further comprise a quantity of a powdered nutritional product within the product containing space, e.g. infant formula.

The invention still further relates to a method of manufacturing a package, comprising: providing a tub having a base and a sidewall defining a product containing space, the sidewall terminating in a peripheral flange defining an access opening to the space; filling the space with a quantity of powdered nutritional product; providing a web of laminate material comprising at least a barrier layer and a cover layer; partially cutting through the laminate material to form a tear line extending through at least the cover layer, the tear line defining a tear strip having a pull tab and a removable panel, encircled by a border; connecting a section of the laminate material to the tub by joining the border to the peripheral flange to seal the package, whereby the tear strip overlies the access opening; and separating the section of laminate material from the web. The provision of sections of laminate material as parts of a web for sealing of containers or tubs allows for more convenient handling of the process and also more accurate positioning of the web. Location of the tear line with respect to the access opening can thus be improved. In certain embodiments, the separation of the sections of laminate material from the web will take place after sealing of the tub. In other embodiments, these actions may take place almost simultaneously e.g in a single process.

Although laminate closures in single-web form may have been known in the past, the provision of such webs including a tear line defining a removable panel is believed to be new. In the present context, web of laminated material is intended to mean that the barrier layer and the cover layer are both present as a web, i.e. neither is present only in disconnected regions. This ensures that the web of laminated material can itself be formed by bringing together a barrier web and a cover web in a lamination process. The barrier web and the cover web may be coextensive, at least throughout the area in which the tubs are located. These webs may also be fully laminated in all areas except for the locations of the pull tabs. Fully laminated is intended in this context to denote that the layers or individual webs forming the laminate are sufficiently adhered together to resist separation or delamination in use. As described above, local delamination at the pull tab may be provided.

The skilled person will be well aware of methods by which such regions of delamination may be achieved e.g. by use of a printing process to selectively deposit adhesive onto one of the barrier or cover web during the lamination process whereby the region of the pull tab is kept free of adhesive or given a lighter coating. In one embodiment, adhesive may be deposited during lamination to ensure that the pull tab comprises a fully adhered central region, a partially adhered region adjacent to the central region and an unadhered gripping region. During manufacture of the web of laminate material, the regions designated to become the pull tab may be provided with other characteristics to facilitate its use. These may include markings e.g. using printing techniques, score lines, texturing or other ways to improve gripping and facilitate easy lifting of the gripping regions or wings of the pull tab. It will be understood that the section of laminate material can be a foil as described above and hereinafter.

The invention also relates to a web of laminate material for use in the above described method. The web of laminate material may comprise a plurality of sections, each section comprising a foil as described above or hereinafter.

### BRIEF DESCRIPTION OF THE DRAWINGS

The features and advantages of the invention will be appreciated upon reference to the following drawings of a number of exemplary embodiments, in which:
Figure 1 shows a package incorporating the invention in perspective view;
Figure 2 shows the package of Figure 1 in exploded perspective view;
Figure 3 a cross-section through Figure 1, along line III-III;
Figure 3A shows an enlarged detail of part of Figure 3, illustrating the laminate layers'
Figure 4 shows a plan view of part of the sealing foil of Figure 2;
Figure 5 shows a cross-section through the sealing foil of Figure 4 along line V-V;
Figures 6 and 7 shows similar cross-section to Figure 5 during operation of the pull tab;
Figure 8 shows a schematic view of a manufacturing process for a web and packages incorporating the invention; and
Figure 9 shows a plan view of the web of Figure 9.

### DESCRIPTION OF ILLUSTRATIVE EMBODIMENTS

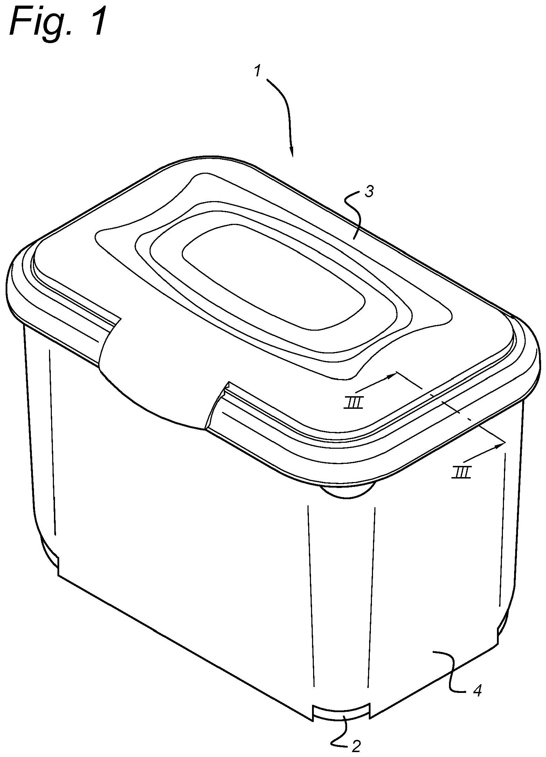

Figure 1 shows in perspective view a package 1 incorporating the present invention. The package 1 is in its completed state and includes a tub 2, enclosed by a sleeve 4, and a lid assembly 3.

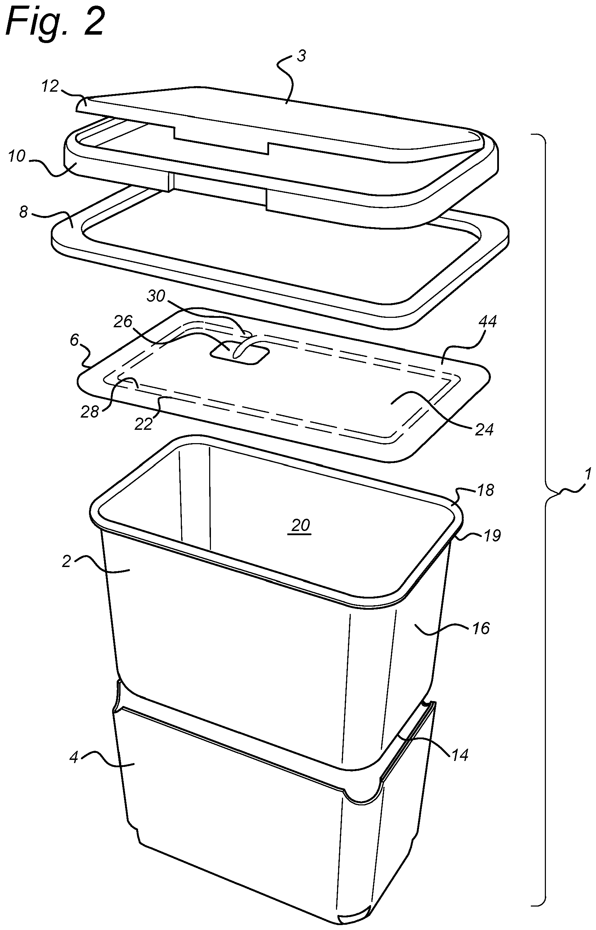

Figure 2 shows a partially exploded view of the package 1 showing in further detail the component parts of the package 1, including the tub 2, the sleeve 4, a foil 6, a lower rim 8, an upper rim 10 and a lid 12. The tub 2 is thermoformed of a laminate of inner and outer relatively thin polypropylene material layers and an intermediate EVOH barrier layer. It includes a base 14 and a peripheral wall 16 defining a product containing space 20. The peripheral wall 16 extends to an upper edge 18 having an outwardly directed flange 19. The sleeve 4 is formed of carton.

Lower rim 8 is formed as a flat annular ring of a similar dimension to the outwardly directed flange 19. The lower rim 8 is injection moulded of polypropylene, although it will be understood that other appropriate materials could also be employed. The upper rim 10 and lid 12 form the lid assembly 3 and are also formed of injection moulded polypropylene. The lid 12 is hingedly connected to the upper rim 10 at a hinge (not shown). The foil 6 includes a tear line 22 defining a tear strip 28 extending from a pull tab 26 to a tail 30. Within the tear strip 28 is a removable panel 24, while outside it is a border 44.

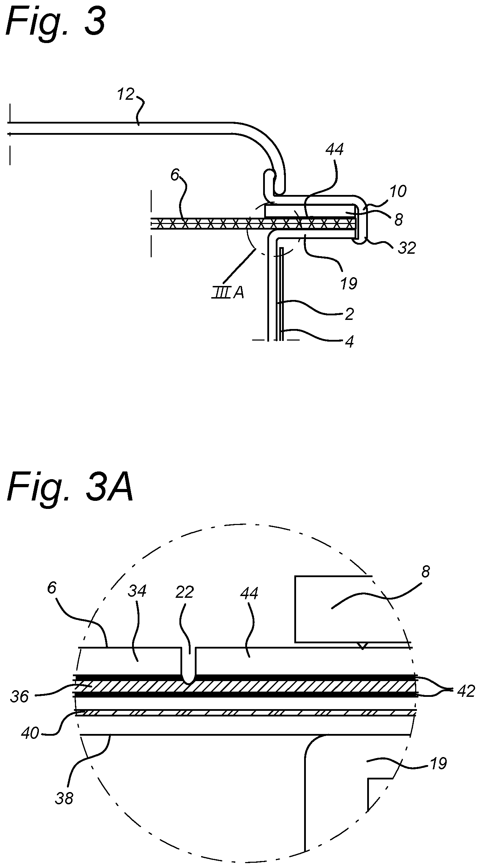

Figure 3 is a partial cross-section through the package 1 in the direction III-III of Figure 1. Figure 3 illustrates the location of the foil 6 between the flange 19 and the lower rim 8. In terms of construction, the border 44 of foil 6 is heat sealed to the flange 19 and welded by the use of ultrasound to the lower rim 8. Also shown in this view is a snap connector 32 at an outer edge of the upper rim 10, which is designed to mechanically engage with the lower rim 8 in an interference fit.

Figure 3A is an enlargement of a portion of the seal 6 of Figure 3, showing its construction. As can be seen, the seal 6 comprises a number of layers laminated together including a cover layer 34, an oxygen barrier layer 36 and a support layer 38. In the illustrated embodiment, the cover layer 34 comprises a 40 micron layer of oriented PP, the oxygen barrier layer 36 is a 9 micron thick layer of aluminium and the support layer 38 comprises a 40 micron thick laminate of PP/EVOH/PP. The EVOH layer 40 acts as a further barrier layer. The cover layer 34, oxygen barrier layer 36 and support layer 38 are laminated together by adhesive layers 42 of urethane adhesive. The tear line 22 extends through the cover layer 34 and terminates at the oxygen barrier layer 36. The use of aluminium for the oxygen barrier layer 36 allows the use of a laser to form the tear line 22 subsequent to lamination of the layer together to form the foil, since the aluminium prevents the laser from penetrating deeper into the support layer 38. Nevertheless, pin-pricks in the aluminium may occur and the use of the further barrier layer 40 ensures still that low oxygen permeability is maintained.

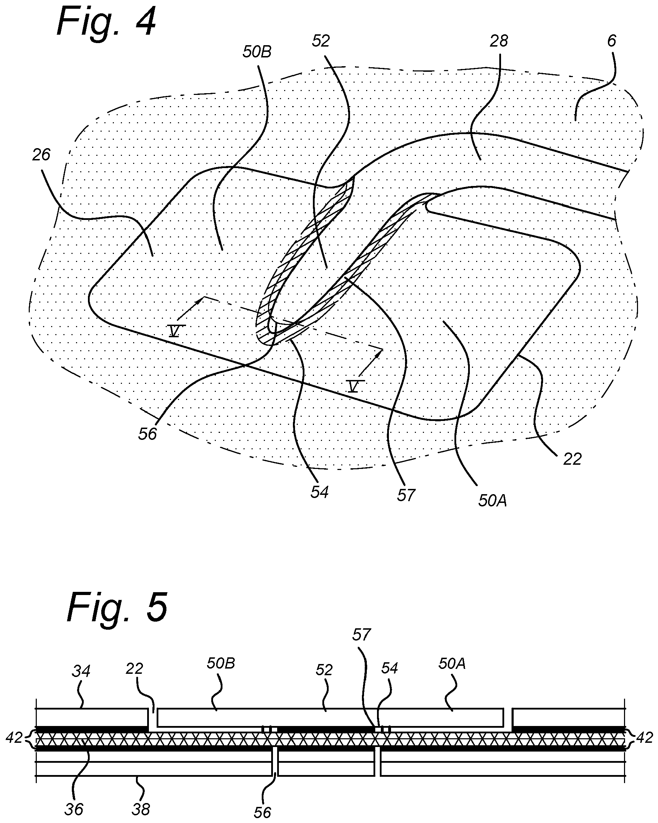

Figure 4 is a plan view of a portion of the foil 6 of Figure 2 in the region of the pull tab 26. The tear line 22 extends from the tear strip 28 around an outer perimeter of the pull tab 26 and defines a pair of lateral wings 50A, 50B. The wings 50A, 50B are delaminated with respect to the remainder of the foil 6 i.e. there is no adhesive 42 between the cover layer 34 and the oxygen barrier layer 36 beneath the wings 50A, 50B. Although in the present embodiment, the adhesive 42 is completely absent in this region, the skilled person will understand that it need not be completely absent to the extent that the wings 50A, 50B can be easily lifted or peeled away from the layer beneath.

Between the wings 50A, 50B is a spine or central region 52 in which the cover layer 34 is fully laminated. The central region 52 is aligned with the tear strip 28 and is surrounded by a region of partial lamination 54, where the wings 50A, 50B are less strongly adhered to the remainder of the foil 6. For the illustrated embodiment, in the region of full lamination under the central region 52, the peel strength of the adhesive 42 is around 3 N/15mm ASTM F904. The wings 50A, 50B have a length of around 35 mm, meaning that a force of around 7 N may be exerted per wing before delamination occurs. In the region of partial lamination 54, the peel strength of the adhesive is around 2 N/15mm ASTM F904. Also shown in Figure 4 is cut 56, which extends beneath the region of partial lamination 54 in a direction generally following the central region 52 and extending from the tear strip 28 to a point where it passes under the central region 52.

Figure 5 shows a cross-sectional view through the foil 6 in the direction V-V in Figure 4, corresponding to the location at which the cut 56 first intersects with a margin of the central region 52. In this view, the relative positions of the tear line 22 through the cover layer 34 and the cut 56 through the support layer 38 can be seen. Also visible are the layers of adhesive 42 between the support layer 38 and the oxygen barrier layer 36 and between the oxygen barrier layer 36 and the cover layer 34. The former layer of adhesive 42 is continuous whereas the latter layer of adhesive 42 is interrupted at the delaminated region beneath the wings 50A, 50B where no adhesive is present.

Furthermore, it may be noted that the cut 56 is directly below the margin of the central region 52 and is covered by the region of partial lamination 54. The presence of this region of partial lamination 54 helps ensure that any flaw in the oxygen barrier layer 36 at this point will still be covered by an adhered portion of the cover layer 34. Beneath the central region 52, a full layer of adhesive 42 is present.

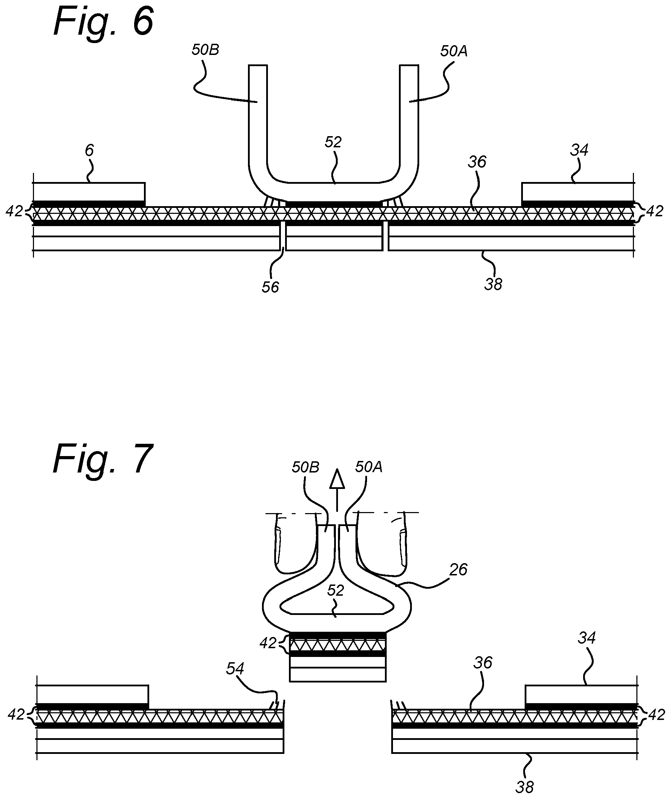

Figure 6 shows a view similar to that of Figure 5 with the wings 50A, 50B raised to a position perpendicular to the foil 6. In this position, the region of partial lamination 54 is still adhered and overlaps the cut 56.

Figure 7 shows a further view similar to that of Figure 6, in which a user has gripped the pull tab 26 by grasping the wings 50A, 50B between thumb and fore-finger. On gripping and pulling the pull tab 26 upwards, the region of partial lamination 54 is caused to delaminate up to the point at which the central region 52 begins and the cover layer 34 is fully laminated to the oxygen barrier layer 36. Once delamination or peeling back of the wings 50A, 50B ceases, further upwards directed force on the pull tab is applied to the oxygen barrier layer 36, which will start to rip at the point at which it is least supported, namely the location of the cut 56. Initiation of the tear thus takes place at the position of line V-V in Figure 4, at the two points where the cut 56 coincides with the margin of the central region 52. From there, the tear follows the cut 56 towards the tear strip 28 and once the cut 56 terminates, along the tear line 22 towards the tail 30. Based on the peel strength indicated above, a force of around 14 N may be applied without delamination occurring. Opening of the package may be achieved with a force of around 12 N due to the focussing of this force to the location of least resistance.

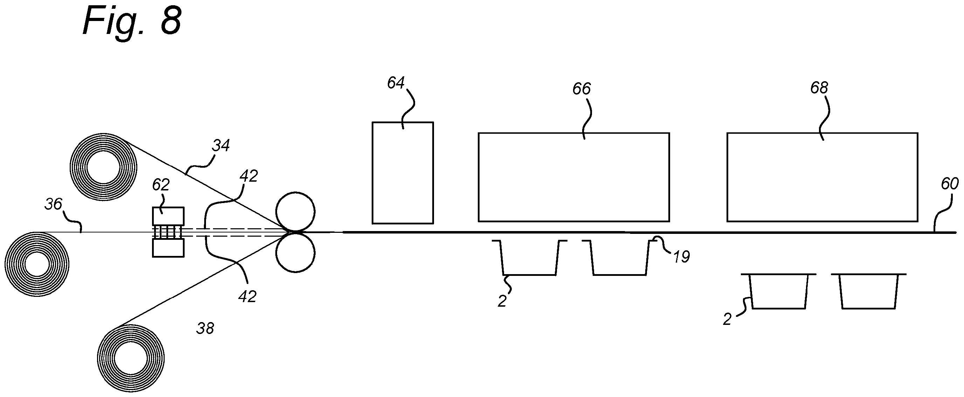

Figure 8 shows schematically the manufacture of a web 60 of laminate material for use in manufacturing the foil 6 of Figure 2. The web 60 comprises co-extensive layers corresponding to the layers described in relation to Figure 3A, namely a cover layer 34, an oxygen barrier layer 36 and a support layer 38, laminated together by adhesive layers 42. During lamination of the web 60, adhesive layers 42 are deposited selectively by a printing device 62 such that at least the adhesive layer 42 between the cover layer 34 and oxygen barrier layer 36 has areas without adhesive corresponding to the locations of the wings 50A, 50B in addition to regions of partial lamination 54 as described above. Although shown as a single lamination step, in practice the cover layer 34 and the support layer 38 may be laminated to the barrier layer 36 in separate procedures at separate times and even locations.

Subsequent to lamination, the tear lines 22 and cuts 56 are applied using a laser cutter 64. In a subsequent phase, which may also take place at a different location, the web 60 is applied to tubs 2 at an automated filling and sealing station 66. Thereafter, the sealed tub 2 is separated from the foil 60 at a separating station 68.

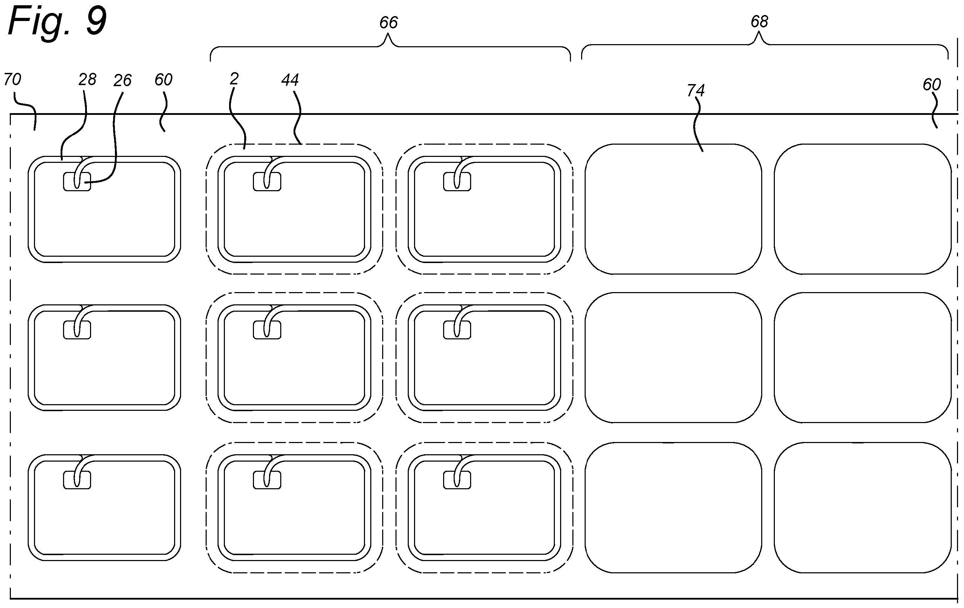

Figure 9 shows part of the web 60 of Figure 8 in plan view at the location of the filling and sealing station 66 and the separating station 68. The web 60 comprises a number of sections 70, each having a tear strip 28 and pull tab 26. Each section 70 overlies a respective tub 2 whereby the border 44 is positioned above the flange 19 and is heat-sealed thereto. At the separating station 68, the web 60 is cut around the outside of the border 44 to separate the sections 70, leaving openings through the web 60. It will be understood that these steps may also be integrated and/or separating of the foil sections 70 may take place during sealing or just prior thereto.

The invention has thus been described in the context of the illustrated embodiment. It will be understood that many modifications in addition to those described above may be made to the structures and techniques described herein without departing from the spirit and scope of the invention. Accordingly, although specific embodiments have been described, these are examples only and are not limiting upon the scope of the invention.

## Claims

1. A tearable foil (6) for sealing a package, the foil comprising a plurality of layers laminated together, including at least an oxygen barrier layer (36) and a cover layer (34), a tear line (22) penetrating at least partially through the cover layer to define a tear strip (28) extending from a pull tab (26) to define a removable panel (24) encircled by a border (44), wherein the pull tab comprises lateral wings (50A, 50B) that are delaminated with respect to the remainder of the foil, on either side of a central region (52) that is laminated to the remainder of the foil, whereby a user may fold the lateral wings together at right angles to a plane of the foil and grip them to exert a force on the central region and thus commence tearing of the tear strip.

2. The foil according to claim 1, comprising a support layer (38) below the oxygen barrier layer, the support layer preferably comprising polypropylene.

3. The foil according to claim 2, wherein the support layer comprises a cut (56) in or adjacent to the central region to facilitate tearing of the foil at this point.

4. The foil according to claim 3, comprising a region of partial lamination (54) surrounding the central region, where the lateral wings are adhered to the remainder of the foil with a lower adhesion than the central region and wherein the cut preferably traverses the region of partial lamination and extends under the central region.

5. The foil according to any preceding claim, wherein the oxygen barrier layer comprises an aluminium layer and wherein the tear line is preferably cut through the cover layer by use of a laser and the aluminium layer serves to prevent deeper penetration of the laser.

6. The foil according to any preceding claim, wherein the support layer comprises a further barrier layer, preferably comprising EVOH.

7. The foil according to any preceding claim, wherein the cover layer comprises oriented PP.

8. The foil according to any preceding claim, wherein each wing has an area of at least 1 cm², more preferably at least 2cm².

9. A package comprising a tub (2) having a base (14) and a sidewall (16) defining a product containing space (20), the sidewall terminating in a peripheral, preferably outwardly extending, flange (19) defining an access opening to the space and a foil according to any preceding claim , sealed at its border to the flange.

10. The package according to claim 9, further comprising a rim (8), the rim being connected to the flange with the foil sandwiched therebetween.

11. The package according to claim 10, further comprising a lid (12) connected to the rim, the lid being pivotable between an open position and a closed position in which it closes the access opening.

12. The package according to claim 11, wherein the tub and the rim comprise polypropylene.

13. The package according to any of claims 9 to 12, further comprising a quantity of a powdered nutritional product, preferably infant formula, within the product containing space.

14. A method of manufacturing a package, comprising:
providing a tub having a base and a sidewall defining a product containing space, the sidewall terminating in a peripheral flange defining an access opening to the space;
filling the space with a quantity of powdered nutritional product;
providing a web of laminate material comprising at least a barrier layer and a cover layer;
partially cutting through the laminate material to form a tear line extending through at least the cover layer, the tear line defining a tear strip having a pull tab and a removable panel, encircled by a border;
connecting a section of the laminate material to the tub by joining the border to the peripheral flange to seal the package, whereby the tear strip overlies the access opening; and
separating the section of laminate material from the web, wherein the section of laminate material is a foil according to any of claims 1 to 8.

15. A web of laminate material for use in the method according to claim 14.

## Patentansprüche

1. Reißbare Folie (6) zum Versiegeln einer Verpackung, wobei die Folie eine Vielzahl von miteinander laminierten Schichten umfasst, einschließlich mindestens einer Sauerstoffbarriereschicht (36) und einer Deckschicht (34), wobei eine Reißlinie (22) zumindest teilweise durch die Deckschicht eindringt, um einen sich von einer Zuglasche (26) erstreckenden Aufreißstreifen (28) zu definieren, zum Definieren einer von einem Rand (44) umgebenen entfernbaren Platte (24), wobei die Zuglasche Seitenflügel (50A, 50B) umfasst, die in Bezug auf den Rest der Folie auf jeder Seite eines zentralen Bereichs (52), der auf den Rest der Folie laminiert ist, delaminiert sind, wodurch ein Benutzer die Seitenflügel rechtwinklig zu einer Ebene der Folie zusammenfalten und sie ergreifen kann, um eine Kraft auf den zentralen Bereich auszuüben und somit das Reißen des Aufreißstreifens zu beginnen.

2. Folie nach Anspruch 1, umfassend eine Trägerschicht (38) unterhalb der Sauerstoffbarriereschicht, wobei die Trägerschicht vorzugsweise Polypropylen umfasst.

3. Folie nach Anspruch 2, wobei die Trägerschicht einen Schnitt (56) in oder benachbart zu dem zentralen Bereich umfasst, um das Aufreißen der Folie an diesem Punkt zu erleichtern.

4. Folie nach Anspruch 3, umfassend einen Bereich mit teilweiser Laminierung (54), der den zentralen Bereich umgibt, wo die Seitenflügel mit einer geringeren Haftung an dem Rest der Folie haften als der zentrale Bereich und wobei der Schnitt vorzugsweise den Bereich der teilweisen Laminierung durchläuft und sich unter dem zentralen Bereich erstreckt.

5. Folie nach einem voranstehenden Anspruch, wobei die Sauerstoffbarriereschicht eine Aluminiumschicht umfasst und wobei die Reißlinie vorzugsweise unter Verwendung eines Lasers durch die Deckschicht geschnitten wird und die Aluminiumschicht dazu dient, ein tieferes Eindringen des Lasers zu verhindern.

6. Folie nach einem voranstehenden Anspruch, wobei die Trägerschicht eine weitere Barriereschicht umfasst, vorzugsweise umfassend EVOH.

7. Folie nach einem voranstehenden Anspruch, wobei die Deckschicht orientiertes PP umfasst.

8. Folie nach einem voranstehenden Anspruch, wobei jeder Flügel eine Fläche von mindestens 1 cm², bevorzugter von mindestens 2 cm² aufweist.

9. Verpackung, umfassend einen Becher (2) mit einem Boden (14) und einer Seitenwand (16), die einen Produkt enthaltenden Raum (20) umgrenzt, wobei die Seitenwand in einem umlaufenden, sich vorzugsweise äußerlich erstreckenden, Flansch (19) endet, der eine Zugangsöffnung zu dem Raum umgrenzt, und eine Folie nach einem voranstehenden Anspruch, die an ihrem Rand mit dem Flansch abgedichtet ist.

10. Verpackung nach Anspruch 9, ferner umfassend eine Einfassung (8), wobei die Einfassung mit dem Flansch verbunden ist, mit der Folie eingeklemmt zwischen diesen.

11. Verpackung nach Anspruch 10, ferner umfassend einen mit der Einfassung verbundenen Deckel (12), wobei der Deckel zwischen einer offenen Position und einer geschlossenen Position, in der er die Zugangsöffnung schließt, schwenkbar ist.

12. Verpackung nach Anspruch 11, wobei der Becher und die Einfassung Polypropylen umfassen.

13. Verpackung nach einem der Ansprüche 9 bis 12, ferner umfassend eine Menge eines pulverförmigen Ernährungsprodukts, vorzugsweise Säuglingsanfangsnahrung, innerhalb des Produkt enthaltenden Raumes.

14. Verfahren zum Herstellen einer Verpackung, umfassend:
Bereitstellen eines Bechers mit einem Boden und einer Seitenwand, die einen Produkt enthaltenden Raum umgrenzt, wobei die Seitenwand in einem umfänglichen Flansch endet, der eine Zugangsöffnung zu dem Raum umgrenzt;
Füllen des Raums mit einer Menge an pulverförmigem Ernährungsprodukt;
Bereitstellen einer Bahn aus Laminatmaterial, umfassend mindestens eine Barriereschicht und eine Deckschicht;
teilweises Durchschneiden des Laminatmaterials, um eine Reißlinie zu bilden, die sich mindestens durch die Deckschicht erstreckt, wobei die Reißlinie einen Reißstreifen mit einer Zuglasche und einer entfernbaren Platte umgrenzt, die von einem Rand umgeben sind;
Verbinden eines Abschnitts des Laminatmaterials mit dem Becher durch Verbinden des Randes mit dem umfänglichen Flansch, um die Verpackung zu versiegeln, wodurch der Aufreißstreifen über der Zugangsöffnung liegt; und
Trennen des Abschnitts des Laminatmaterials von der Bahn, wobei der Abschnitt des Laminatmaterials eine Folie nach einem der Ansprüche 1 bis 8 ist.

15. Bahn aus Laminatmaterial zur Anwendung in dem Verfahren nach Anspruch 14.

## Revendications

1. Feuille déchirable (6) pour sceller un conditionnement, la feuille comprenant une pluralité de couches stratifiées ensemble, y compris au moins une couche barrière à l'oxygène (36) et une couche de couverture (34), une ligne de déchirure (22) pénétrant au moins partiellement à travers la couche de couverture pour définir une bande de déchirure (28) s'étendant à partir d'une languette à tirer (26) pour définir un panneau amovible (24) entouré par une bordure (44), dans laquelle la languette à tirer comprend des ailettes latérales (50A, 50B) qui ne sont pas stratifiées par rapport au reste de la feuille, de part et d'autre d'une région centrale (52) qui est stratifiée sur le reste de la feuille, de telle sorte qu'un utilisateur peut plier les ailettes latérales à angle droit par rapport à un plan de la feuille et les saisir de façon à exercer une force sur la région centrale et ainsi commencer à déchirer la bande de déchirure.

2. Feuille selon la revendication 1, comprenant une couche de support (38) sous la couche barrière à l'oxygène, la couche de support comprenant de préférence du polypropylène.

3. Feuille selon la revendication 2, dans laquelle la couche de support comprend une découpe (56) dans ou adjacente à la région centrale pour faciliter une déchirure de la feuille au niveau de ce point.

4. Feuille selon la revendication 3, comprenant une région de stratification partielle (54) entourant la région centrale, où les ailettes latérales sont mises en adhérence sur le reste de la feuille avec une adhérence inférieure à la région centrale et dans laquelle la découpe traverse de préférence la région de stratification partielle et s'étend sous la région centrale.

5. Feuille selon l'une quelconque des revendications précédentes, dans laquelle la couche barrière à l'oxygène comprend une couche d'aluminium et dans laquelle la ligne de déchirure est de préférence découpée à travers la couche de couverture à l'aide d'un laser et la couche d'aluminium sert à empêcher une pénétration plus profonde du laser.

6. Feuille selon l'une quelconque des revendications précédentes, dans laquelle la couche de support comprend une couche barrière supplémentaire, comprenant de préférence de l'EVOH.

7. Feuille selon l'une quelconque des revendications précédentes, dans laquelle la couche de couverture comprend du PP orienté.

8. Feuille selon l'une quelconque des revendications précédentes, dans laquelle chaque ailette a une surface d'au moins 1 cm², de manière plus préférée d'au moins 2 cm².

9. Conditionnement comprenant une cuve (2) ayant une base (14) et une paroi latérale (16) définissant un espace (20) contenant un produit, la paroi latérale se terminant par une bride périphérique s'étendant de préférence vers l'extérieur (19) définissant une ouverture d'accès à l'espace et une feuille selon l'une quelconque des revendications précédentes, scellé au niveau de sa bordure avec la bride.

10. Conditionnement selon la revendication 9, comprenant en outre un rebord (8), le rebord étant lié à la bride avec la feuille enserrée entre eux.

11. Conditionnement selon la revendication 10, comprenant en outre un couvercle (12) relié au rebord, le couvercle pouvant pivoter entre une position ouverte et une position fermée dans laquelle il ferme l'ouverture d'accès.

12. Conditionnement selon la revendication 11, dans lequel la cuve et le rebord comprennent du polypropylène.

13. Conditionnement selon l'une quelconque des revendications 9 à 12, comprenant en outre une quantité d'un produit nutritionnel en poudre, de préférence une préparation pour nourrisson, à l'intérieur de l'espace contenant un produit.

14. Méthode de fabrication d'un conditionnement, comprenant les étapes consistant à :
fournir une cuve ayant une base et une paroi latérale définissant un espace contenant un produit, la paroi latérale se terminant par une bride périphérique définissant une ouverture d'accès à l'espace ;
remplir l'espace d'une quantité de produit nutritionnel en poudre ;
fournir une bande de matériau stratifié comprenant au moins une couche barrière et une couche de couverture ;
découper partiellement le matériau stratifié pour former une ligne de déchirure s'étendant à travers au moins la couche de couverture, la ligne de déchirure définissant une bande de déchirure ayant une languette à tirer et un panneau amovible, entouré d'une bordure ;
connecter une section du matériau stratifié à la cuve en joignant la bordure à la bride périphérique pour sceller le conditionnement, de telle sorte que la bande de déchirure recouvre l'ouverture d'accès ; et
séparer la section de matériau stratifié à partir de la bande, dans laquelle la section de matériau stratifié est une feuille selon l'une quelconque des revendications 1 à 8.

15. Bande de matériau stratifié à utiliser dans le procédé selon la revendication 14.
